# EUROPEAN PATENT APPLICATION

(11) **EP 4 564 499 A1**
(43) Date of publication of application: **04.06.2025**
(21) Application number: 24212361.0
(22) Date of filing: 12.11.2024
(51) Int. Cl.: H01M 10/04

(54) **APPARATUS AND METHOD FOR MANUFACTURING SECONDARY BATTERY**

(30) Priority: 15.11.2023 KR 20230158114
(71) Applicant: Samsung SDI Co., Ltd., Yongin-si, Gyeonggi-do 17084 (KR)
(72) Inventor: Kim, Hyo Jeong, Suwon-si, Gyeonggi-do 16678 (KR); Kim, Chan Hoon, Suwon-si, Gyeonggi-do 16678 (KR)
(74) Representative: Gulde & Partner

(57) **Abstract**

Disclosed is a secondary battery manufacturing apparatus (300) that reduces occurrence of skew failure in electrode plates. The secondary battery manufacturing apparatus (300) includes a roller (310) conveying a sheet (200), a sensor (330) measuring tension of the sheet (200) during conveyance of the sheet (200), and a driver (320) controlling operation of the roller (310) based on the measured tensions.

## Description

### BACKGROUND

### 1. Field of the Invention

The present invention relates to an apparatus and method for manufacturing a secondary battery.

### 2. Description of the Related Art

In recent years, demand for high energy density and high capacity secondary batteries has grown rapidly with rapid spread of electronic devices using batteries, such as mobile phones, notebook computers, and electric vehicles. Thus, research and development have been actively carried out to improve lithium secondary batteries.

A lithium secondary battery may include a cathode, an anode, an electrolyte, and a separator interposed between the cathode and the anode that contain active materials allowing intercalation and deintercalation of lithium ions, and produces electrical energy through oxidation and reduction upon intercalation/deintercalation of lithium ions in the cathode and the anode.

A process for manufacturing an electrode plate, such as a cathode or an anode, or a separator may include the steps of winding, unwinding, or rolling the electrode plate or the separator. In addition, the manufacturing process may also include the step of conveying the electrode plate or the separator such that the electrode plate or the separator can be conveyed onto a device where each step is performed.

In the process of conveying the electrode plate or the separator, skew failure can occur in which the electrode plate or the separator is skewed to one side and becomes unbalanced. Here, the electrode plate or the separator can suffer from winding failure or uneven formation thereof, causing short circuit within the secondary battery. Therefore, it is necessary to prevent skew failure of the electrode plate or the separator.

This section is intended only to provide a better understanding of the background of the invention and thus may include information which is not necessarily prior art.

### SUMMARY OF THE INVENTION

It is an aspect of the present invention to provide an apparatus and method for manufacturing a secondary battery.

For example, an embodiment of the invention provides an apparatus and method for manufacturing a secondary battery, which can prevent skew failure of an electrode plate or a separator.

The above and other aspects and features of the present invention will become apparent from the following description of embodiments of the present invention.

In accordance with one aspect of the present invention, there is provided a secondary battery manufacturing apparatus including: a roller conveying a sheet; a sensor measuring tension of the sheet; and a driver controlling operation of the roller based on the measured tension.

The roller may comprise a first roller and a second roller and the sensor may be provided to at least one of at least a portion of the first roller, at least a portion of the second roller, and at least a portion between the first roller and the second roller.

The sensor may comprise a first sensor mounted on one side of the roller. A second sensor may be mounted on the other side of the roller, and the first sensor and the second sensor may be be spaced apart from each other by a set or predetermined distance.

The driver may control operation of the roller by controlling at least one of a feeding amount of the roller and a moving angle of the roller based on the measured tension.

The driver may calculate the sum of the measured tensions, may determine a difference between the sum of the measured tensions and a target tension, and may control operation of the roller based on whether the difference is within a first range.

Upon determining that the difference is not within the first range, the driver may control operation of the roller so as to decrease a feeding amount of the roller when the sum of the measured tensions is greater than the target tension, and may control operation of the roller so as to increase the feeding amount of the roller when the sum of the measured tensions is less than the target tension.

The driver may determine a ratio of tension in a first direction of the sheet and tension in a second direction of the sheet based on the measured tension and may control the driving of the roller based on whether the determined ratio is within a second range.

Upon determining that the determined ratio is not within the second range, the driver may adjust the moving angle of the roller to a first angle when the tension in the first direction is greater than the tension in the second direction, and may adjust the moving angle of the roller to a second angle when the tension in the first direction is less than the tension in the second direction.

The sensor may comprise a load cell.

In accordance with another aspect of the present invention, there is provided a secondary battery manufacturing method including the steps of: conveying a sheet through a roller; measuring tension of the sheet through a sensor during conveyance of the sheet; and controlling operation of the roller based on the measured tension through a driver.

The secondary battery manufacturing method may comprise: conveying a sheet through a roller; measuring tension of the sheet through a sensor during conveyance of the sheet; and controlling operation of the roller based on the measured tension through a driver.

The sensor may comprise a load cell.

The step of controlling operation of the rollers may comprise: calculating the sum of the measured tensions; determining a difference between the sum of the tensions and a target tension; and controlling operation of the roller based on whether the difference is within a first range.

Upon determining that the determined difference is not within the first range, the step of controlling operation of the roller may comprise: controlling operation of the roller so as to decrease a feeding amount of the roller when the sum of the measured tensions is greater than the target tension; and controlling operation of the roller so as to increase the feeding amount of the roller when the sum of the measured tensions is less than the target tension.

The step of controlling operation of the roller may comprise: determining a difference between a ratio of tension in a first direction of the sheet and tension in a second direction of the sheet based on the measured tension; and
controlling operation of the roller based on whether the determined difference is within a second range.

Upon determining that the difference is not within the second range, the step of controlling operation of the roller may comprise: adjusting the moving angle of the roller to a first angle when the tension in the first direction is greater than the tension in the second direction; and adjusting the moving angle of the roller to a second angle when the tension in the first direction is less than the tension in the second direction.

The apparatus and method for manufacturing a secondary battery according to embodiments of the present invention can manufacture an electrode plate and/or a separator without skew failure.

However, aspects and features of the invention are not limited to those described above and other aspects and features not mentioned will be clearly understood by those skilled in the art from the detailed description given below.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 to FIG. 4 are schematic cross-sectional views of lithium secondary batteries according to embodiments of the present invention;
FIG. 5A and FIG. 5B is a view of an example of skew failure occurring in a sheet;
FIG. 6 is a schematic view of a secondary battery manufacturing apparatus according to an embodiment of the present invention;
FIG. 7 is a flowchart illustrating a secondary battery manufacturing method according to an embodiment of the present invention;
FIG. 8 is a schematic view of a secondary battery manufacturing apparatus according to an embodiment of the present invention;
FIG. 9 is a flowchart illustrating a secondary battery manufacturing method according to an embodiment of the present invention;
FIG. 10 is a schematic diagram illustrating an example of controlling operation of a roller according to an embodiment of the present invention;
FIG. 11 is a flowchart illustrating a secondary battery manufacturing method according to an embodiment of the present invention; and
FIG. 12 is a schematic diagram illustrating an example of controlling operation of the roller according to an embodiment of the present invention.

### DETAILED DESCRIPTION OF EXEMPLARY EMBODIMENTS

Hereinafter, exemplary embodiments of the present invention will be described, in detail, with reference to the accompanying drawings. The terms or words used in this specification and claims should not be construed as being limited to the usual or dictionary meaning and should be interpreted as having meanings and concepts consistent with the technical idea of the present invention based on the principle that the inventor can be his/her own lexicographer to appropriately define the concept of the term to explain his/her invention in the best way. The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof. Further, the use of "may" when describing embodiments of the present invention relates to "one or more embodiments of the present invention."

In the figures, dimensions of the various elements, layers, etc. may be exaggerated for clarity of illustration. The same reference numerals designate the same elements.

References to two compared elements, features, etc. as being "the same," may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless specified otherwise, each element may be singular or plural.

When an arbitrary element is referred to as being disposed (or located or positioned) "above" (or "below") or "on" (or "under") a component, it may mean that the arbitrary element is placed in contact with the upper (or lower) surface of the component and may also mean that another component may be interposed between the component and any arbitrary element disposed (or located or positioned) on (or under) the component.

In addition, it will be understood that, when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless specified otherwise. That is, "and/or" includes any or all combinations of a plurality of items enumerated. When "C to D" is stated, it means C or more and D or less, unless specified otherwise.

The terminology used herein is for the purpose of describing embodiments of the present invention and is not intended to be limiting of the present invention.

### Lithium secondary battery

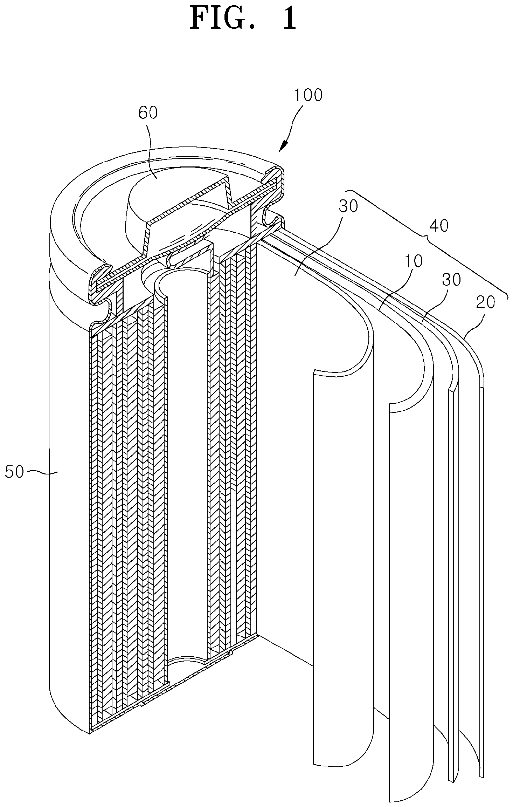

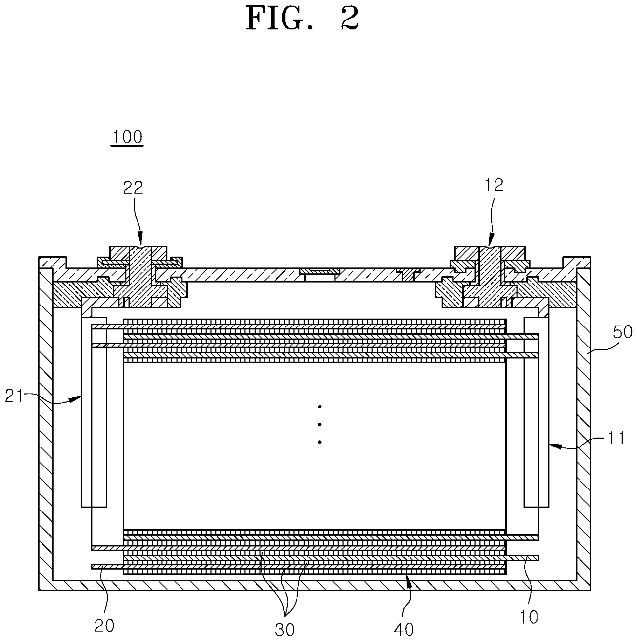

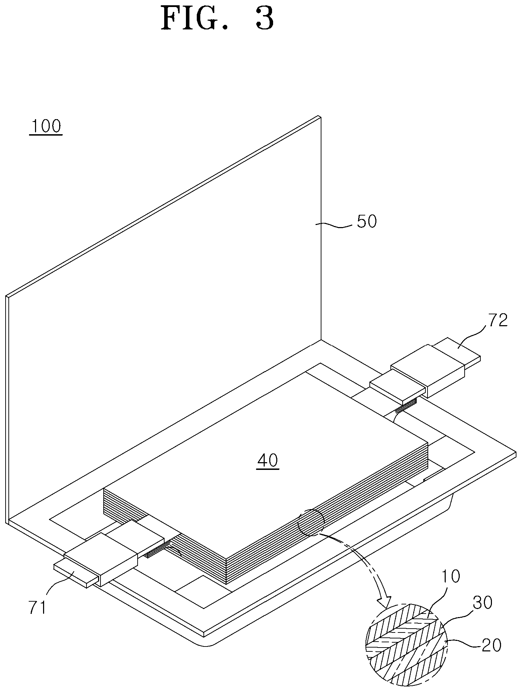

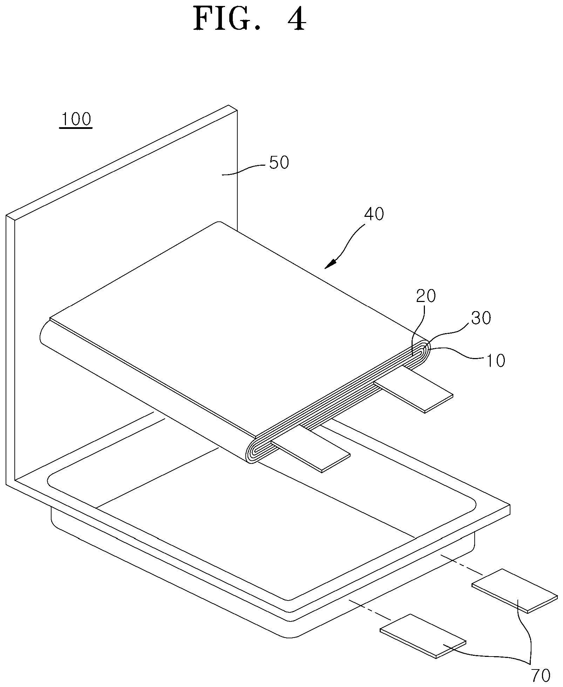

Lithium secondary batteries may be classified into, e.g., a cylindrical secondary battery, a faceted secondary battery, a pouch type secondary battery, a coin type secondary battery, and the like based on the shapes thereof. FIG. 1 to FIG. 4 are schematic views of lithium secondary batteries according to embodiments of the present invention, in which FIG. 1 shows a cylindrical secondary battery, FIG. 2 shows a faceted secondary battery, and FIG. 3 and FIG. 4 show pouch-type secondary batteries. Referring to FIG. 1 to FIG. 4, a lithium secondary battery 100 may include an electrode assembly 40 that includes a separator 30 interposed between a cathode 10 and an anode 20, and a case 50 that receives the electrode assembly 40 therein. The cathode 10, the anode 20, and the separator 30 may be embedded in an electrolyte (not shown). The lithium secondary battery 100 may include a sealing member 60 that seals the case 50, as shown in FIG. 1. In addition, as shown in FIG. 2, the lithium secondary battery 100 may include a cathode lead tab 11, a cathode terminal 12, an anode lead tab 21, and an anode terminal 22. As shown in FIG. 3 and FIG. 4, the lithium secondary battery 100 may include electrode tabs 70, that is, a cathode tab 71 and an anode tab 72, which act as electrical pathways conducting current formed in the electrode assembly 40 to the outside.

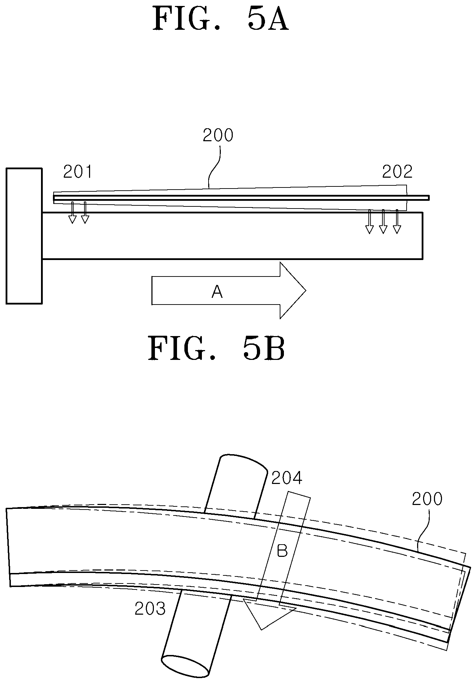

With reference to FIG. 1 to FIG. 4, schematic components and/or materials of the lithium secondary battery are described. Hereinafter, referring to FIG. 5 to FIG. 12, a method of manufacturing the lithium secondary battery 100 described in FIG. 1 to FIG. 4 will be described. For example, referring to FIG. 5 to FIG. 12, a method for manufacturing an electrode plate and/or a separator included in the lithium secondary battery 100 described in FIG. 1 to FIG. 4 will be described.

It should be understood that the secondary battery manufacturing apparatus and/or method described with reference to FIG. 5 to FIG. 12 is applicable to any apparatus for manufacturing a sheet. The sheet refers to a thin plate or a structure, which has a longer length in one direction than in the other direction (e.g., than in a perpendicular direction) and is subjected to tension in at least one direction. The sheet includes, for example, an electrode plate, a separator, and the like used in a secondary battery. Hereinafter, an object for the manufacturing apparatus and/or the manufacturing method according to the present invention will be referred to as a "sheet" for convenience of description.

FIG. 5A and FIG. 5B is a view of an example of skew failure occurring in a sheet.

In FIG. 5A and FIG. 5B, reference numeral 200 denotes a sheet. In FIG. 5A and FIG. 5B, arrows A, B indicate directions in which the sheet 200 undergoes skew failure. FIG. 5A and FIG. 5B shows all conveyance states of the sheet 200 in the manufacturing process. For example, all states of the sheet 200 before and after rolling, winding or unwinding, and before notching or slitting are shown therein.

Referring to FIG. 5A, for example, one side 201 of the sheet 200 may have a greater thickness than the other side 202 thereof. As such, the sheet 200 can undergo skew failure due to a difference in thickness between both sides 201, 202 thereof.

Referring to FIG. 5B, for example, one side 203 of the sheet 200 has a shorter length than the other side 204 there, causing an imbalance between both sides 203, 204 thereof. Accordingly, the sheet 200 becomes slanted and undergoes skew failure due to the imbalance thereof.

The causes of skew failure of the sheet 200 are not limited to the examples shown in FIG. 5A and FIG. 5B. The following description will focus on a method of manufacturing the sheet 200 without skew failure due to such various causes.

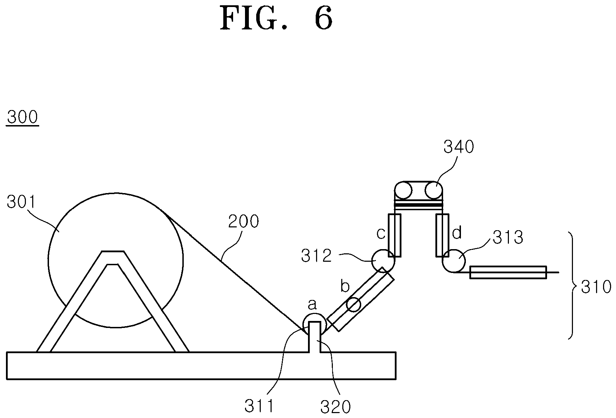

FIG. 6 is a schematic view of a secondary battery manufacturing apparatus according to an embodiment of the present invention.

In FIG. 6, reference numeral 300 denotes the secondary battery manufacturing apparatus according to an embodiment of the present invention.

As shown in FIG. 5A and FIG. 5B, the secondary battery manufacturing apparatus 300 according to the embodiment refers to any device implementing steps in a process of conveying the sheet 200. For example, the secondary battery manufacturing apparatus 300 performs a rolling function. To this end, for example, the secondary battery manufacturing apparatus 300 conveys the sheet 200 towards a rolling roller that performs rolling, or conveys the rolled sheet 200 from the rolling roller. Alternatively, for example, the secondary battery manufacturing apparatus 300 may perform a notching function. To this end, for example, the secondary battery manufacturing apparatus 300 conveys the sheet 200 towards a mold for notching operation or conveys the notched sheet 200 from the mold. Alternatively, for example, the secondary battery manufacturing apparatus 300 may be a conveyance device. Accordingly, for example, the secondary battery manufacturing apparatus 300 may convey the sheet 200 from one working device toward another working device. As such, the secondary battery manufacturing apparatus 300 may include any device that functions as a conveyance device for the sheet 200 or performs conveyance as a process within the secondary battery manufacturing apparatus 300.

As such, for conveyance, the secondary battery manufacturing apparatus 300 includes a roller 310, a driver 320, and a sensor (for example, a, b, c, or d). The secondary battery manufacturing apparatus 300 may further include an unwinder 301. The secondary battery manufacturing apparatus 300 may further include an edge pivot controller (EPC) 340. However, it should be understood that the secondary battery manufacturing apparatus 300 is not limited to the components shown in FIG. 6 and may include all or only some of the components shown in FIG. 6. The secondary battery manufacturing apparatus 300 may further include additional components not shown in FIG. 6. For example, the secondary battery manufacturing apparatus 300 may further include a communication unit capable of wired or wireless, short- or long-range communication with an external server, device, and the like. Alternatively, for example, the secondary battery manufacturing apparatus 300 further includes a memory storing instructions for operation of the secondary battery manufacturing apparatus 300.

With this configuration, the secondary battery manufacturing apparatus 300 according to the embodiment can convey the sheet 200 while preventing skew failure of the sheet 200. Hereinafter, each component of the secondary battery manufacturing apparatus will be described by way of example.

The unwinder 301 is a device for unwinding the wound sheet 200. To this end, the unwinder 301 includes an unwinding shaft and an unwinding roller. The unwinding roller rotates about the unwinding shaft in one direction. As the unwinding roller rotates, the sheet 200 wound around the unwinding roller is unwound in one direction. With this structure, the unwinder 301 allows the sheet 200 to be supplied to a device or location where the sheet 200 is required.

The roller 310 conveys the sheet 200. For example, the roller 310 conveys the sheet 200 in a preset direction or conveys the sheet 200 while reversing a traveling direction of the sheet 200. Alternatively, the roller 310 conveys the sheet 200 while rolling the sheet 200 through two or more rollers.

To this end, the roller 310 rotates about the roller shaft in one direction. A rotating direction of the roller 310 is set based on the traveling direction of the sheet 200. For example, in order to convey the sheet 200 moving along a surface of the roller 310 in the counterclockwise direction, the roller 310 rotates about the roller shaft in the counterclockwise direction.

The roller 310 includes, for example, a first roller 311, a second roller 312, and a third roller 313. However, it should be understood that this structure is provided by way of example and the roller 310 may include only one roller or may include four or more rollers. The first roller 311 conveys the sheet 200 while changing the traveling direction of the sheet 200. The second roller 312 conveys the sheet 200 toward a predetermined component (for example, the EPC 340). The third roller 313 conveys the sheet 200 away from the predetermined component (for example, the EPC 340). It should be noted that the roles performed by the first roller 311, the second roller 312 and/or the third roller 313 may be the same or different from each other.

The sensor (for example, a, b, c, or d) measures tension of the sheet 200. For example, the sensor (for example, a, b, c, or d) measures tension at one or more locations on the sheet 200.

The sensor (for example, a, b, c, or d) is provided to at least a portion of the secondary battery manufacturing apparatus 300 to measure the tension applied to the sheet 200. For example, the sensor (for example, a) is disposed on a roller (for example, the first roller 311). Alternatively, for example, the sensor (for example, b) is disposed between rollers (for example, between the first roller 311 and the second roller 312). Alternatively, for example, the sensor (for example, c) is disposed before the EPC 340. Alternatively, for example, the sensor (for example, d) is disposed after the EPC 340. As such, the sensor (for example, a, b, c, or d) may be disposed at any locations on a conveyance path of the sheet 200.

For example, the sensor (for example, a, b, c, or d) includes a load cell.

The driver 320 controls operation of the roller 310. The driver 320 controls operation of the roller 310 based on the measured tension. For example, the driver 320 controls a rotational speed of the roller 310. For example, the driver 320 increases, maintains or decreases the rotational speed of the roller 310 based on the measured tension. Alternatively, for example, the driver 320 controls a moving angle of the roller 310. For example, based on the measured tension, the driver 320 adjusts the roller shaft of the roller 310 to have a positive angle relative to the ground, adjusts the roller shaft of the roller 310 to be parallel to the ground, or adjusts the roller shaft of the roller 310 to have a negative angle relative to the ground.

The driver 320 is, for example, a central processing unit (CPU), a microprocessor unit (MPU), a microcontroller unit (MCU), a graphics processing unit (GPU), a digital signal processor (DSP), a floating-point unit (FPU), an application specific integrated circuit (ASIC), or a field programmable gate array (FPGA).

The driver 320 is disposed near the roller 310 to control operation of the roller 310, as shown in FIG. 6. However, the driver 320 may be placed away from the roller 310 or may be placed outside the secondary battery manufacturing apparatus 300 to control all or some of the components included in the secondary battery manufacturing apparatus 300 through wired or wireless communication.

The EPC 340 may include a pivot type EPC and may independently perform compensation for skew failure of the sheet 200. The EPC 340 compensates for skew failure of the sheet 200, for example, through accurate control of a pivot angle. Alternatively, the EPC 340 may perform, for example, all or some of functions performed by the driver 320. As such, the EPC 340 allows compensation for skew failure of the sheet 200 in the secondary battery manufacturing apparatus 300 to be more effectively performed.

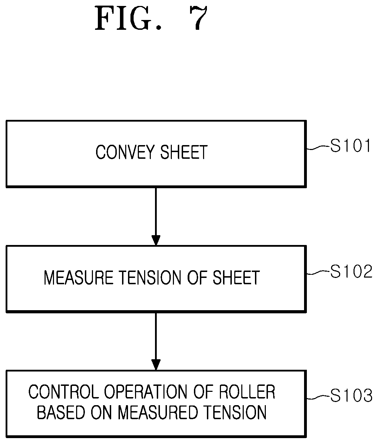

As such, the secondary battery manufacturing apparatus 300 according to the embodiment minimizes skew failure of the sheet 200 by controlling operation of the roller 310 based on the tension of the sheet 200. Referring to FIG. 7, a process for preventing skew failure will be described in more detail.

FIG. 7 is a flowchart illustrating a secondary battery manufacturing method according to an embodiment of the present invention.

The manufacturing method described with reference to FIG. 7 may be performed not only by the secondary battery manufacturing apparatus 300 according to the embodiment described with reference to FIG. 6, but also by a system including separate devices capable of performing each step, or by other devices capable of performing each step. That is, an entity capable of implementing the secondary battery manufacturing method according to the embodiment described with reference to FIG. 7 is not limited to the secondary battery manufacturing apparatus 300. However, in FIG. 7 and the following description, for convenience of description, the secondary battery manufacturing method according to the embodiment performed by the secondary battery manufacturing apparatus 300 will be described by way of example.

Referring to FIG. 7, the secondary battery manufacturing method includes the step of conveying a sheet 200 (S101). According to an embodiment of the invention, the roller 310 conveys the sheet 200. Conveyance of the sheet 200 is the same as or similar to that described with reference to FIG. 6.

Referring to FIG. 7, the secondary battery manufacturing method includes the step of measuring tension of the sheet 200 (S103).

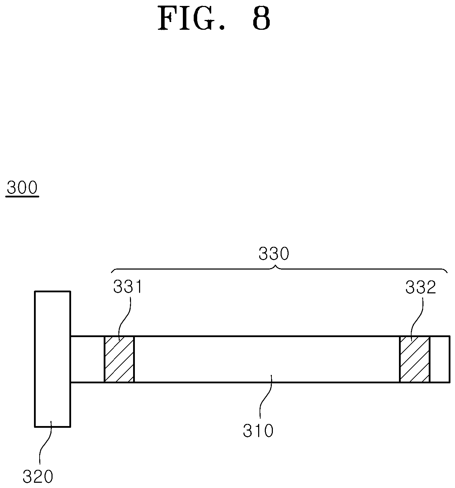

The sensors a, b, c, d (see FIG. 6) according to the embodiment measure data about the sheet 200. The sheet 200 is, for example, under conveyance or stopped. The data about the sheet 200 includes, for example, tension that the sheet 200 receives from the secondary battery manufacturing apparatus 300 or from an external source during conveyance of the sheet 200. The sensors a, b, c, d include any sensing devices capable of measuring data about the sheet 200. The sensors a, b, c, d calculate tension of the sheet 200 through at least one of the following methods, for example, a method of measuring tension through a load cell, a method of measuring tension through lift-off, a method of measuring a vibration signal through an accelerometer to calculate tension based on the natural frequency, a method of estimating relative permeability through a solenoid to calculate tension, and a method of estimating tension through sag measurement. Referring to FIG. 8, the method of measuring tension using the sensors a, b, c, d will be described below in detail.

As shown in FIG. 7, the secondary battery manufacturing method includes the step of controlling operation of the roller 310 based on the measured tension (S103).

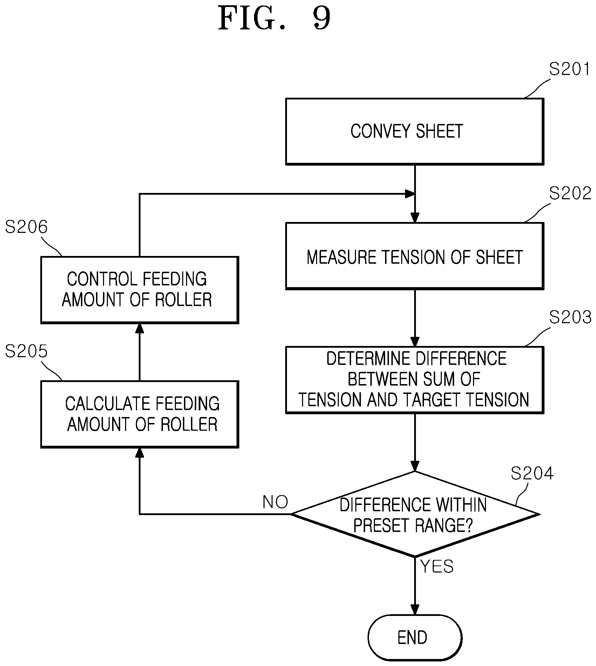

The driver 320 according to the embodiment controls operation of the roller 310 to minimize occurrence of skew failure of the sheet 200 based on the tension of the sheet. The driver 320 controls, for example, the moving angle of the roller 310 or a feeding amount of the roller 310 to minimize occurrence of skew failure of the sheet 200. Controlling operation of the roller 310 will be described in more detail with reference to FIG. 9 to FIG. 12.

In this way, the secondary battery manufacturing apparatus and/or the secondary battery manufacturing method according to the embodiments of the invention improves process capability through direct measurement of tension on a traveling path of the sheet.

FIG. 8 is a schematic view of a secondary battery manufacturing apparatus according to an embodiment of the present invention.

In FIG. 8, reference numeral 300 denotes the secondary battery manufacturing apparatus described with reference to, for example, FIG. 6 and FIG. 7. As described above, the secondary battery manufacturing apparatus 300 according to the embodiment includes a roller 310 and a driver 320 that controls operation of the roller 310. The secondary battery manufacturing apparatus 300 further includes sensors 330 (including, for example, the sensors a, b, c, d described with reference to FIG. 6 and FIG. 7) that measure the tension of the sheet 200 while the sheet 200 is conveyed by the roller 310.

As described in FIG. 7, the sensors 330 are, for example, load cells. When the sensors 330 are the load cells, the sensors 330 may be used as a replacement for the roller 310.

For example, as illustrated for the sensor a in FIG. 6, the sensors 330 are arranged on the roller 310. For example, two or more sensors 330 are mounted on one roller 310. Here, for example, the sensors 330 include a first sensor 331 and a second sensor 332.

For example, the first sensor 331 is mounted on one side of the roller 310. The one side of the roller 310 corresponds to, for example, one side of the sheet 200 conveyed by the roller 310. With this structure, the first sensor 331 measures tension on the one side of the sheet 200.

For example, the second sensor 332 is mounted on the other side of the roller 310. The other side of the roller 310 is spaced apart from one side of the roller 310 by a predetermined distance. For example, when one side of the roller 310 is a relatively right side of the roller 310, the other side of the roller 310 is a relatively left side of the roller 310. With this structure, the second sensor 332 measures tension on the other side of the sheet 200. Accordingly, the second sensor 332 is spaced apart from the first sensor 331 by a predetermined distance.

With this arrangement, the sensors 330 measure tension on at least two portions of the sheet 200. The driver 320 calculates the sum of tension on one side of the sheet 200 and tension on the other side thereof or balance therebetween to control operation of the roller 310 in a direction of reducing a deviation in tension therebetween.

Accordingly, the secondary battery manufacturing apparatus and/or the secondary battery manufacturing method according to the embodiments of the invention provides a means for analyzing and/or suppressing skew failure that occurs in the sheet 200.

FIG. 9 is a flowchart illustrating a secondary battery manufacturing method according to an embodiment of the invention.

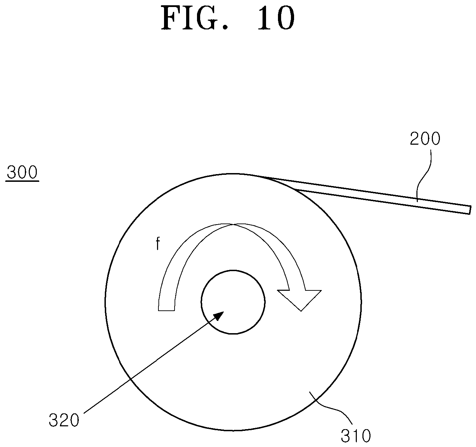

FIG. 10 is a schematic diagram illustrating an example of controlling operation of a roller according to an embodiment of the invention.

The method of controlling operation of the roller 310 based on the tension measured by the driver 320 is described above with reference to FIG. 6 to FIG. 8. As one example of the method of controlling operation of the roller 310, control of the feeding amount of the roller 310 based on the tension measured by the driver 320 will be described in detail with reference to FIG. 9 and FIG. 10.

Referring to FIG. 9, the secondary battery manufacturing method includes the step of conveying the sheet 200 (S201). The description of Step S201 is the same as or similar to the description of the step of conveying the sheet 200 (S101) in FIG. 6 and FIG. 7.

Referring to FIG. 9, the secondary battery manufacturing method includes the step of measuring tension of the sheet 200 (S202). The description of Step S202 is the same as or similar to the description of the step of measuring tension of the sheet 200 (S102) in FIG. 6 and FIG. 7.

Referring to FIG. 9, the secondary battery manufacturing method includes the step of determining a difference between the sum of the measured tensions and a target tension (S203).

The driver 320 calculates the sum of the measured tensions. The sum of the tensions is the sum of tensions measured in at least two regions on the sheet 200.

The driver 320 determines a difference between the sum of the measured tensions and the target tension. Here, the target tension is the sum of tensions measured in at least two regions of the sheet 200 when the sheet 200 is conveyed without skew failure. The target tension may be, for example, a preset value stored in a memory (including, for example, the memory described in FIG. 6) or a value received from an external source via a communication unit (including, for example, the communication unit described in FIG. 6).

For example, the driver 320 calculates an absolute value of the sum of the measured tensions subtracted from the target tension. The calculated absolute value is the difference between the sum of the tensions and the target tension.

Referring to FIG. 9, the secondary battery manufacturing method includes the step of determining whether the difference is within a preset range (S204).

The driver 320 determines whether the difference calculated in S203 is within a preset range (first range). Here, the preset range is the same as or a similar range to the target tension. The preset range is a range within which it is determined that the sheet 200 is not in a skew failure state. The preset range is greater than or equal to 0 and includes 0. When the preset range is 0, the driver 320 determines that the sum of the measured tensions is within the preset range only when the sum of the measured tensions is equal to the target tension (within a decimal point range that can be measured by the sensor 330 and/or calculated by the driver 320).

The driver 320 does not control operation of the roller 310 when the difference calculated in S203 is within the preset range. Here, the driver 320 determines that the sheet 200 does not undergo skew failure.

Referring to FIG. 9, the secondary battery manufacturing method includes the step of calculating the feeding amount of the roller 310 upon determining that the difference is not within the preset range (S205).

The driver 320 calculates the feeding amount of the roller 310 in order to control operation of the roller 310 upon determining that the difference calculated in S203 is not within the preset range. Here, the feeding amount of the roller 310 relates to the rotational speed of the roller 310. The feeding amount of roller 310 refers to a length of sheet 200 (or including, for example, weight, mass or any other physical quantity from which the conveying speed of the sheet 200 can be calculated) that is conveyed through roller 310 per hour. For example, the feeding amount of the roller 310 increases with increasing rotational speed of the roller 310. For example, the feeding amount of the roller 310 decreases with decreasing rotational speed of the roller 310.

For example, upon determining that the sum of the measured tensions is greater than the target tension, the driver 320 calculates the feeding amount of the roller 310 such that the feeding amount of the roller 310 decreases. Here, "decrease" means that the feeding amount decreases with reference to a current feeding amount. Alternatively, for example, upon determining that the sum of the measured tensions is less than the target tension, the driver 320 calculates the feeding amount of the roller 310 such that the feeding amount of the roller 310 increases. Here, "increase" means that the feeding amount increases with reference to the current feeding amount.

Referring to FIG. 9, the secondary battery manufacturing method includes the step of controlling the feeding amount of the roller 310 (S206).

For example, when the driver 320 calculates the feeding amount of the roller in S205 such that the feeding amount of the roller 310 increases, the driver 320 increases the rotational speed of the roller 310 such that the sheet 200 is conveyed faster (more) through the roller 310. Here, for example, the roller 310 rotates faster in a direction f shown in FIG. 10.

For example, when the driver 320 calculates the feeding amount of the roller in S205 such that the feeding amount of the roller 310 decreases, the driver 320 decreases the rotational speed of the roller 310 such that the sheet 200 is conveyed slower (less) through the roller 310. Here, for example, the roller 310 rotates slower in the direction f shown in FIG. 10.

As such, the secondary battery manufacturing apparatus and/or the secondary battery manufacturing method according to the embodiments of the invention measures tension and uses the measured tension to perform a feedback action to prevent skew failure of the sheet. As a result, the embodiments of the invention minimize skew failure of the sheet 200.

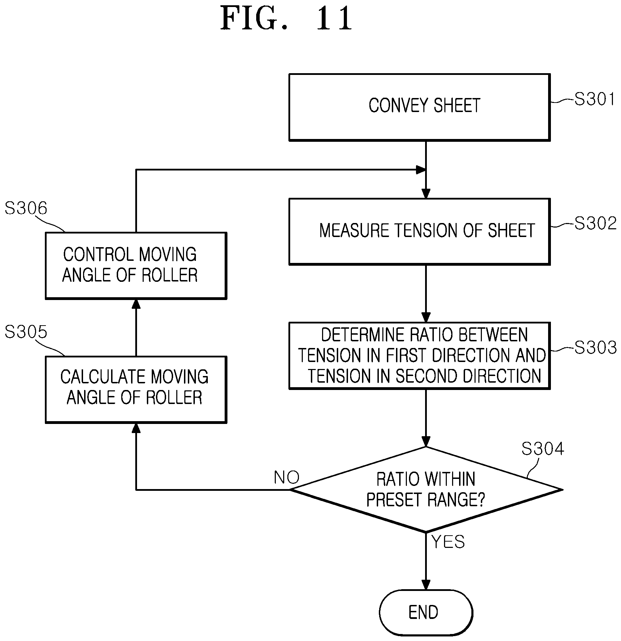

FIG. 11 is a flowchart illustrating a secondary battery manufacturing method according to an embodiment of the present invention.

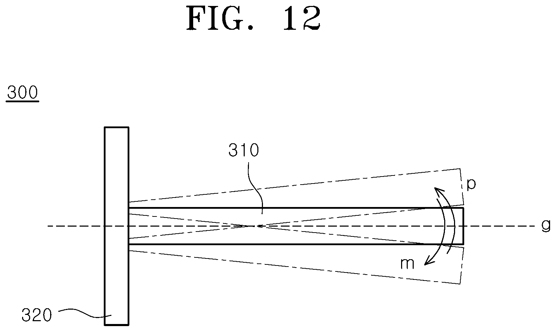

FIG. 12 is a schematic diagram illustrating an example of controlling operation of a roller according to an embodiment of the present invention.

The method of controlling operation of the roller 310 based on the tension measured by the driver 320 is described above with reference to FIG. 6 to FIG. 8. Next, as another method of controlling operation of the roller 310, for example, a method of controlling the moving angle of the roller 310 based on the tension measured by the driver 320 will be described in detail with reference to FIG. 11 and FIG. 12.

Referring to FIG. 11, the secondary battery manufacturing method includes the step of conveying the sheet 200 (S301). The description of Step S301 is the same as or similar to the description of the step of conveying the sheet 200 (S101) in FIG. 6 and FIG. 7.

Referring to FIG. 11, the secondary battery manufacturing method includes the step of measuring tension of the sheet 200 (S302). The description of Step S302 is the same as or similar to the description of the step of measuring tension of the sheet 200 (S102) in FIG. 6 and FIG. 7.

Referring to FIG. 11, the secondary battery manufacturing method includes the step of determining a ratio between tension in a first direction and tension in a second direction (S303).

The driver 320 calculates the tension in the first direction and the tension in the second direction based on the measured tension. The first direction and/or the second direction correspond to, for example, one side and the other side described with reference to FIG. 8. The driver 320 determines the ratio between the tension in the first direction and the tension in the second direction. For example, the ratio is a value obtained by dividing the tension in the first direction by the tension in the second direction.

Referring to FIG. 11, the secondary battery manufacturing method includes the step of determining whether the ratio is within a preset range (S304).

The driver 320 determines whether the ratio between the tension in the first and the tension in the second directions is within a preset range (second range). Here, the preset range is a range within which it is determined that the sheet 200 is not in a skew failure state. For example, the preset range is in the range of 0.9 to 1.1 and includes 1. For example, when the preset range is 1, the driver 320 determines that skew failure does not occur only when the tension in the first direction is equal to the tension in the second direction (within a decimal point range that can be measured by the sensor 330 and/or calculated by the driver 320).

The driver 320 does not control operation of the roller 310 when the ratio between the tension in the first and the tension in the second directions is within the preset range. Here, the driver 320 determines that the sheet 200 does not undergo skew failure.

Referring to FIG. 11, the secondary battery manufacturing method includes the step of calculating the moving angle of the roller 310 upon determining that the difference is outside the preset range.

The driver 320 calculates the moving angle of the roller 310 in order to control operation of the roller 310, upon determining that the ratio calculated in S302 is outside the preset range. Here, the moving angle of the roller 310 refers to an angle of a rotational axis of the roller 310 with respect to the ground. For example, when the rotational axis of the roller 310 is parallel to the ground, the moving angle of the roller 310 is denoted by g in FIG. 12. For example, when the rotational axis of the roller 310 is at a positive angle relative to the ground, the moving angle of the roller 310 is denoted by p in FIG. 12. For example, when the rotational axis of the roller 310 is at a negative angle relative to the ground, the moving angle of the roller 310 is denoted by m in FIG. 12.

For example, upon determining that the tension in the first direction is greater than the tension in the second direction, the driver 320 calculates the moving angle of the roller 310 as a first angle. The first angle is one of angles at which the second direction of the roller 310 is placed above the first direction of the roller 310. For example, upon determining that the tension in the first direction is less than the tension in the second direction, the driver 320 calculates the moving angle of the roller 310 as a second angle. The second angle is one of angles at which the second direction of the roller 310 is placed below the first direction of the roller 310.

Referring to FIG. 11, the secondary battery manufacturing method includes the step of controlling the moving angle of the roller 310 (S306).

For example, the driver 320 controls the moving angle of the roller 310 according to the value calculated in S305. Accordingly, the roller 310 has the moving angle controlled, for example, in the direction m or the direction p in FIG. 12.

By way of summation and review, in the process of conveying the electrode plate or the separator, skew failure may occur, in which the electrode plate or the separator is skewed to one side and becomes unbalanced, thereby causing winding failure or uneven formation of the electrode plate or the separator. As a result, a short circuit may be triggered within the secondary battery. Therefore, it is desired to prevent skew failure of the electrode plate or the separator.

It is an aspect of embodiments to provide an apparatus and method for manufacturing a secondary battery, which can prevent or substantially minimize skew failure of an electrode plate or a separator. As such, the secondary battery manufacturing apparatus and/or the secondary battery manufacturing method according to the embodiments of the invention includes positioning sensors along the traveling path of the sheet to measure tensions on the sheet, and performing feedback actions using the measured tensions to prevent skew failure. As a result, the embodiments of the invention minimize skew failure of the sheet.

Although the present invention has been described with reference to some embodiments and drawings illustrating aspects thereof, the present invention is not limited thereto. Various modifications and variations can be made by a person skilled in the art to which the present invention belongs within the scope of the of the present invention as defined by the appended claims and equivalents thereto.

## Claims

1. A secondary battery manufacturing apparatus (300) comprising:
a roller (310) configured for conveying a sheet (200);
a sensor (330) configured for measuring tension of the sheet (200); and
a driver (320) configured for controlling operation of the roller (310) based on the measured tension.

2. The secondary battery manufacturing apparatus (300) according to claim 1, wherein the roller (310) comprises a first roller (311) and a second roller (312) and the sensor (330) is provided to at least one of at least a portion of the first roller (311), at least a portion of the second roller (312), and at least a portion between the first roller (311) and the second roller (312).

3. The secondary battery manufacturing apparatus (300) according to claim 1 or 2, wherein the sensor (330) comprises a first sensor (331) mounted on one side (201, 203) of the roller (310) and a second sensor (332) mounted on the other side (202, 204) of the roller (310), the first sensor (331) and the second sensor (332) being spaced apart from each other by a predetermined distance.

4. The secondary battery manufacturing apparatus (300) according to any one of the preceding claims, wherein the driver (320) is configured to control operation of the roller (310) by controlling at least one of a feeding amount of the roller (310) and a moving angle of the roller (310) based on the measured tension.

5. The secondary battery manufacturing apparatus (300) according to any one of the preceding claims, wherein the driver (320) is configured to calculate the sum of the measured tensions, determine a difference between the sum of the measured tensions and a target tension, and control operation of the roller (310) based on whether the difference is within a first range.

6. The secondary battery manufacturing apparatus (300) according to claim 5, wherein, upon determining that the difference is not within the first range, the driver (320) is configured to control operation of the roller (310) so as to decrease a feeding amount of the roller (310) when the sum of the measured tensions is greater than the target tension, and control operation of the roller (310) so as to increase the feeding amount of the roller (310) when the sum of the measured tensions is less than the target tension.

7. The secondary battery manufacturing apparatus (300) according to any one of the preceding claims, wherein the driver (320) determines a ratio of tension in a first direction of the sheet (200) and tension in a second direction of the sheet (200) based on the measured tension and controls the driving of the roller (310) based on whether the determined ratio is within a second range.

8. The secondary battery manufacturing apparatus (300) according to claim 7, wherein, upon determining that the determined ratio is not within the second range, the driver (320) is configured to adjust the moving angle of the roller (310) to a first angle when the tension in the first direction is greater than the tension in the second direction, and adjust the moving angle of the roller (310) to a second angle when the tension in the first direction is less than the tension in the second direction.

9. The secondary battery manufacturing apparatus (300) according to any one of the preceding claims, wherein the sensor (330) comprises a load cell.

10. A secondary battery manufacturing method comprising:
conveying a sheet (200) through a roller (310);
measuring tension of the sheet (200) through a sensor (330) during conveyance of the sheet (200); and
controlling operation of the roller (310) based on the measured tension through a driver (320).

11. The secondary battery manufacturing method according to claim 10, wherein the sensor (330) comprises a load cell.

12. The secondary battery manufacturing method according to claim 10 or 11, wherein the step of controlling operation of the rollers (310) comprises:
calculating the sum of the measured tensions;
determining a difference between the sum of the tensions and a target tension; and
controlling operation of the roller (310) based on whether the difference is within a first range.

13. The secondary battery manufacturing method according to claim 12, wherein, upon determining that the determined difference is not within the first range, the step of controlling operation of the roller (310) comprises:
controlling operation of the roller (310) so as to decrease a feeding amount of the roller (310) when the sum of the measured tensions is greater than the target tension; and
controlling operation of the roller (310) so as to increase the feeding amount of the roller (310) when the sum of the measured tensions is less than the target tension.

14. The secondary battery manufacturing method according to any one of claims 10 to 13, wherein the step of controlling operation of the roller (310) comprises:
determining a difference between a ratio of tension in a first direction of the sheet (200) and tension in a second direction of the sheet (200) based on the measured tension; and
controlling operation of the roller (310) based on whether the determined difference is within a second range.

15. The secondary battery manufacturing method according to claim 14, wherein, upon determining that the difference is not within the second range, the step of controlling operation of the roller (310) comprises:
adjusting the moving angle of the roller (310) to a first angle when the tension in the first direction is greater than the tension in the second direction; and
adjusting the moving angle of the roller (310) to a second angle when the tension in the first direction is less than the tension in the second direction.
